# EUROPÄISCHE PATENTANMELDUNG

(11) **EP 2 484 878 A2**
(43) Veröffentlichungstag der Anmeldung: **08.08.2012**
(21) Anmeldenummer: 12152365.8
(22) Anmeldetag: 25.01.2012
(51) Int. Cl.: F01P 7/16

(54) **Kühlsystem für mobile Arbeitsmaschine mit verbrennungsmotorisch-elektrischem Antrieb**

(30) Priorität: 02.02.2011 DE 102011010128; 14.02.2011 DE 102011011136
(71) Anmelder: STILL GmbH, 22113 Hamburg (DE)
(72) Erfinder: Lundelius, Jens, 22929 Schönberg (DE); Rudolph, Dr., Christian, 21075 Hamburg (DE)
(74) Vertreter: Geirhos, Johann

(57) **Zusammenfassung**

Bei einem Kühlsystem für eine mobile Arbeitsmaschine, insbesondere ein Flurförderzeug, mit verbrennungsmotorisch-elektrischem Antriebssystem, bei dem von einem Verbrennungsmotor (10) ein Generator (12) angetrieben wird, der einen Stromzwischenkreis, insbesondere einen Gleichspannungszwischenkreis, speist, und mit zumindest einer Leistungselektronik (33), ist in einem Kühlkreis (31) des Verbrennungsmotors (10) nach einem Kühler (15) in der Umlaufrichtung der Kühlflüssigkeit zunächst die Leistungselektronik (33) und dann der Verbrennungsmotor (10) angeordnet.

## Beschreibung

Die Erfindung betrifft ein Kühlsystem für eine mobile Arbeitsmaschine. Insbesondere betrifft die Erfindung ein Kühlsystem für eine mobile Arbeitsmaschine, zum Beispiel ein Flurförderzeug, mit verbrennungsmotorisch-elektrischem Antriebssystem, bei dem von einem Verbrennungsmotor ein Generator angetrieben wird, der einen Stromzwischenkreis, insbesondere einen Gleichspannungszwischenkreis, speist, und mit zumindest einem Elektronikwärmetauscher für eine Leistungselektronik.

Bei mobilen Arbeitsmaschinen, insbesondere Flurförderzeugen wie etwa Gabelstaplern, ist ein verbrennungsmotorisch-elektrischer Antrieb bekannt. Bei diesem treibt ein Verbrennungsmotor, insbesondere ein Diesel- oder Treibgasmotor, einen Generator an, der elektrischen Strom erzeugt. Der elektrische Strom wird in einen Stromzwischenkreis gespeist, zumeist einen Gleichspannungszwischenkreis, und einem oder mehreren elektrischen Fahrmotoren zugeführt sowie weiteren Antrieben der mobilen Arbeitsmaschine, beispielsweise einem Elektromotor, der eine Pumpe zur Versorgung einer Arbeitshydraulik der Arbeitsmaschine antreibt.

Der Verbrennungsmotor erzeugt erhebliche Verlustleistung in Form von Abwärme und muss entsprechend gekühlt werden. Bei modernen Motoren wird hierfür ausschließlich eine Flüssigkeitskühlung mit einem Wasser-Frostschutzmittelgemisch verwendet. Bei der Flüssigkeitskühlung wird in einem Kreislauf durch eine Pumpe zwischen dem Verbrennungsmotor und einem Kühler die Kühlflüssigkeit umgewälzt und in dem Kühler die Abwärme an die Umgebungsluft abgegeben, wobei bei einer mobilen Arbeitsmaschine aufgrund der geringen Fahrgeschwindigkeit und des stationären Betriebs regelmäßig ein Lüfter für den Luftstrom durch den Kühler eingesetzt wird.

Weiterhin ist es üblich, dass zur Ansteuerung der Elektromotoren, etwa der Fahrmotoren oder des Antriebsmotors der Pumpen der Arbeitshydraulik, Leistungselektroniken zum Einsatz kommen, insbesondere Umrichter, die aus dem Gleichspannungszwischenkreis den Gleichstrom in Mehrphasendrehstrom umsetzen. In diesen Leistungselektroniken kommen Leistungshalbleiter zum Einsatz, die sehr hohe Ströme schalten können und in denen deshalb ebenfalls hohe Verlustleistungen anfallen, die in Form von Abwärme über Kühlkörper abgeführt werden müssen. Wenn diese Kühlkörper die Abwärme allein an die Umgebungsluft abgeben, wird durch die fehlende oder nur beschränkte Kühlleistung die Leistungsfähigkeit der Leistungselektronik sehr schnell begrenzt.

Nachteilig an diesem Stand der Technik ist, dass die Luftzuführung und Abführung der erwärmten Luft von und zu den Kühlkörpern der Leistungselektronik entweder eine aufwendige Führung der Kühlluft erfordert, oder die Leistungselektronik an zwar im Hinblick auf die Kühlluftführung günstigen Positionen eingebaut werden muss, die jedoch in Hinblick auf die elektrischen Leitungen und die durch die Leitungslänge entstehenden Verluste ungünstig sind.

Deswegen ist hierfür bekannt, die Leistungshalbleiter bzw. deren Kühlkörper ebenfalls über eine Kühlflüssigkeit zu kühlen. Da bisherige Leistungshalbleiter ein Temperaturniveau für einen optimalen Arbeitspunkt benötigen, das einer maximalen Temperatur von 70°C bis 80°C an dem Kühlkörper entspricht, wird für die Leistungselektronik herkömmlicherweise ein eigener Kühlkreis vorgesehen. Verbrennungsmotoren haben demgegenüber mit einem Überdruckkühlsystem typischerweise Kühlwassertemperaturen von um die 100°C.

Nachteilig an diesem Stand der Technik ist, dass dadurch viele Komponenten doppelt vorhanden sein müssen, etwa zwei Kühlfüssigkeitspumpen. Es müssen Schlauchführungen und Rohrleitungen doppelt vorgesehen werden und schließlich müssen zwei Kühler zum Abgeben der Kühlflüssigkeitswärme an die Umgebungsluft vorgesehen werden. Auch wenn hierfür ein sogenannter Zweizonen-Kühler eingesetzt wird, bei dem in einem Kühlergehäuse zwei Kühlnetze für die beiden Kühlkreise vorgesehen sind, führt dies doch zu erhöhtem Bauaufwand und zusätzlichen Kosten. Die erhöhte Anzahl von Bauteilen und insbesondere Verbindungen, wie etwa Schlauchanschlüssen an Pumpen, Kühlern, Wärmetauschern und sonstigen Bauelementen, beispielsweise Rohrleitungen, führt auch zu einer verringerten Zuverlässigkeit des gesamten Systems, da mehr Möglichkeiten bestehen, dass es zu Ausfällen und Leckagestellen kommen kann. Nachteilig ist auch, dass durch die größere Anzahl von Baukomponenten und Teilen des Gesamtkühlsystems der konstruktiv zur Verfügung stehende Bauraum für weitere Aggregate der mobilen Arbeitsmaschine bzw. des Flurförderzeugs eingeschränkt wird.

Es ist daher Aufgabe der vorliegenden Erfindung, ein Kühlsystem zur Verfügung zu stellen, mit dem möglichst einfach und kostengünstig sowohl die Leistungselektroniken wie auch ein Verbrennungsmotor einer mobilen Arbeitsmaschine mit verbrennungsmotorisch-elektrischem Antriebssystem gekühlt werden können und die zuvor genannten Nachteile vermieden werden können.

Diese Aufgabe wird durch ein Kühlsystem mit den Merkmalen des unabhängigen Anspruchs 1 gelöst. Vorteilhafte Weiterbildungen der Erfindung werden in den Unteransprüchen benannt.

Die Aufgabe wird durch ein Kühlsystem für eine mobile Arbeitsmaschine, insbesondere ein Flurförderzeug, mit verbrennungsmotorisch-elektrischem Antriebssystem gelöst, bei dem von einem Verbrennungsmotor ein Generator angetrieben wird, der einen Stromzwischenkreis, insbesondere einen Gleichspannungszwischenkreis, speist, und bei dem zumindest eine Leistungselektronik vorhanden ist. Erfindungsgemäß ist in einem Kühlkreis des Verbrennungsmotors nach einem Kühler in der Umlaufrichtung der Kühlflüssigkeit zunächst die Leistungselektronik und dann folgend der Verbrennungsmotor angeordnet.

Vorteilhaft ist dadurch eine Vereinfachung des Kühlsystems der mobilen Arbeitsmaschine möglich, da auf das ansonsten notwendige zweite System mit separater Pumpe, zusätzlichen Schläuchen und zumindest einem Zweizonen-Kühler für die Kühlung der Leistungselektronik verzichtet werden kann. Durch die Verwendung von Halbleiterbauelementen für die Leistungselektronik, die höhere Temperaturen im Betrieb zulassen, kann durch das erfindungsgemäße Kühlsystem ein zweiter Kühlkreislauf vermieden werden bzw. es kann von einer Luftkühlung der Leistungselektronik auf eine leistungsfähigere Flüssigkeitskühlung umgestellt werden. Da die Abwärmemenge der Leistungselektronik im Vergleich zu derjenigen des Verbrennungsmotors in Relation gesehen geringer ist und Verbrennungsmotoren von vorneherein im Bereich günstigsten Wirkungsgrades bei relativ hohen Temperaturen betrieben werden, muss bei der erfindungsgemäßen Lösung der Kühlkreis gegenüber einem reinen Kühlkreis nur für den Verbrennungsmotor nur unwesentlich stärker dimensioniert werden. Auch dadurch werden vorteilhaft zusätzliche Kosten und Bauraum eingespart.

In einer vorteilhaften Ausführungsform des Kühlsystems ist die Leistungselektronik für den Betrieb bei Temperaturen an den Kühlflächen der Halbleiterbausteine oberhalb von 70°C, bevorzugt für den Betrieb in einem Temperaturbereich von 95°C bis 105°C geeignet.

Solche Halbleiterbauelemente können Halbleitermodule, Mikroelektronik, Sensorik sowie auch passive Starkstrom- und Elektronikbauelemente beinhalten. Durch die inzwischen bestehende Möglichkeit, anstatt solcher Halbleiterbausteine, die bisher zumeist Temperaturen von ca. 70°C am Kühlkörper im Betrieb voraussetzen, solche mit höheren Temperaturen einzusetzen, ist es völlig ausreichend, die aus dem Kühler kommende Kühlflüssigkeit in dem Kühlkreis, der auch von dem Verbrennungsmotor genutzt wird, zum Kühlen dieser Leistungselektronik einzusetzen. In Kühlkreisläufen für Verbrennungsmotoren stellt sich meist ein Temperaturniveau zwischen 95°C und 105°C ein.

Vorteilhaft ist die Leistungselektronik ein Umrichter für einen elektrischen Fahrmotor der mobilen Arbeitsmaschine, der Strom aus dem Zwischenkreis umrichtet.

Bei einem verbrennungsmotorisch-elektrischen Antriebssystem einer mobilen Arbeitsmaschine, bei der die Fahrantriebsmotoren Elektromotoren sind, muss ein Großteil der von dem Verbrennungsmotor aufgebrachten Leistung, die letztlich für den Antrieb bestimmt ist, von dem Stromzwischenkreis den Elektromotoren zugeführt werden. Vorteilhaft kann dadurch die bei modernen Elektromotoren, wie etwa Asynchron-Drehstrommotoren, in den hierfür nötigen Umrichtern auftretende Verlustleistung gut abgeführt werden und die Leistungsfähigkeit der Umrichter entsprechend erhöht werden.

Vorteilhaft ist der Stromzwischenkreis ein Gleichstromzwischenkreis.

In einer günstigen Ausführungsform umfasst die Leistungselektronik einen Gleichspannungswandler, der den Stromzwischenkreis, insbesondere den Gleichstromzwischenkreis, mit einem elektrischen Energiespeicher, insbesondere Hochleistungskondensatoren oder Hochleistungsakkumulatorbatterien verbindet.

Die Entwicklung zu Hybridlösungen für den Antriebsstrang bei verbrennungsmotorisch-elektrischen Antriebssystemen führt zunehmend dazu, dass das elektrische System mit einem elektrischen Energiespeicher, insbesondere Hochleistungsbatterien oder Hochleistungskondensatoren, ergänzt wird. In diesen elektrischen Energiespeichern kann, z.B. beim Abbremsen, zurückgewonnene elektrische Energie gespeichert werden. Weiterhin ist es möglich, durch diesen elektrischen Energiespeicher bei erhöhtem Leitungsbedarf kurzfristig zusätzliche elektrische Energie zu liefern. Für eine optimale Leistungsfähigkeit und eine hohe Energiedichte mit geringem Bauraum dieser elektrischen Energiespeicher ist es jedoch oftmals notwendig, dass die elektrischen Energiespeicher mit einer anderen Spannung arbeiten und daher die Spannung aus dem Gleichspannungszwischenkreis durch einen Gleichspannungswandler in beide Richtungen umgesetzt wird. Auch hier kann durch das erfindungsgemäße Kühlsystem die Leistungsfähigkeit des Gleichspannungswandlers erhöht werden und die Abführung der Verlustwärme verbessert werden, indem dessen Leistungselektronik in dem Kühlkreis integriert wird.

Es können mehrere Leistungselektroniken parallel oder in Reihe in dem Kühlkreis angeordnet sein.

Da die Abwärmemenge der Leistungselektroniken im Vergleich zur Wärmemenge des Verbrennungsmotors relativ klein ist, können mehrere Leistungselektroniken problemlos nebeneinander parallel in den Kühlkreis eingesetzt werden. Durch ein Anordnen in Reihe kann berücksichtigt werden, wenn eine bestimmte Leistungselektronik ein geringeres Temperaturniveau benötigt.

In vorteilhafter Ausgestaltung der Erfindung ist ein Bremswiderstand parallel zu oder nach der Leistungselektronik in dem Kühlkreis angeordnet.

Auch die mittlere Wärmemenge, die ein Bremswiderstand erzeugt, sobald er beim Bremsen der mobilen Arbeitsmaschine zur Vernichtung der entsprechenden elektrischen Leistung der bremsenden Fahrmotoren angesteuert wird, ist im Verhältnis zu der Abwärmemenge des Verbrennungsmotors in der Regel so gering, dass diese effizient von dem Kühlkreis abgeführt werden kann, ohne dass dieser wesentlich größer dimensioniert werden muss. Überdies wird regelmäßig, wenn es zu einem längeren Bremsen und damit größerem Wärmeanfall in dem Bremswiderstand kommt, gleichzeitig der Verbrennungsmotor nur eine geringe Abwärmemenge abgeben, da er dann nicht in Volllast betrieben wird.

Die Aufgabe wird auch durch eine mobile Arbeitsmaschine, insbesondere ein Flurförderzeug, mit einem Kühlsystem gelöst, wie es zuvor beschrieben wurde. Die mobile Arbeitsmaschine kann dabei vorteilhaft ein Hybridfahrzeug sein.

Hierbei ergeben sich die bereits zuvor geschilderten Vorteile.

Weitere Vorteile und Einzelheiten der Erfindung werden anhand des in den Figuren dargestellten Ausführungsbeispiels näher erläutert. Hierbei zeigt die
- Fig. 1: Ein Flurförderzeug mit einem erfindungsgemäßen Kühlsystem,
- Fig. 2: ein Kühlsystem nach dem Stand der Technik und
- Fig. 3: das erfindungsgemäße Kühlsystem des Flurförderzeugs der Fig. 1.

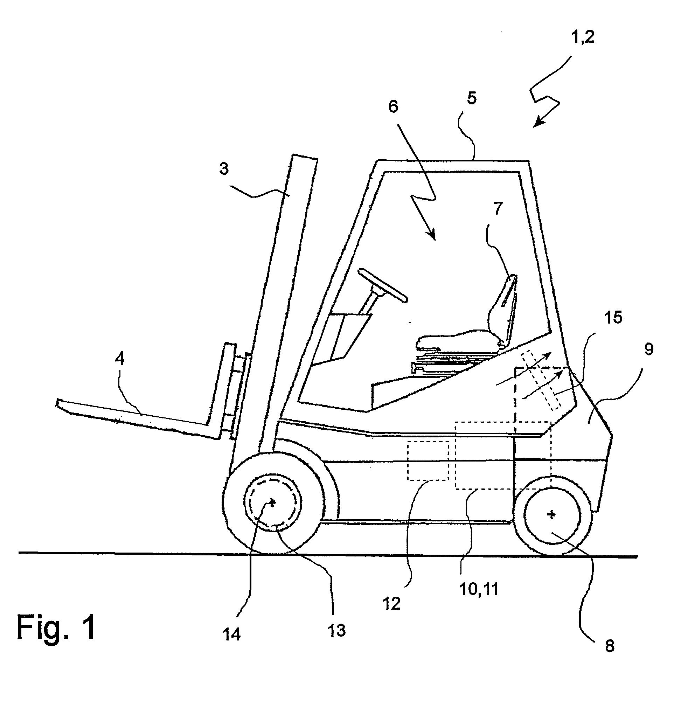

Die Fig. 1 zeigt eine mobile Arbeitsmaschine 1 mit einem verbrennungsmotorisch-elektrischen Antriebssystem, die in Form eines Gegengewichtsgabelstaplers 2 ausgestaltet ist. Der Gegengewichtsgabelstapler 2 weist einen Hubmast 3 auf, an dem als Lastaufnahmemittel eine Lastgabel 4 höhenverfahrbar angeordnet ist. In einer Fahrerkabine 5 ist ein Fahrerarbeitsplatz 6 mit einem Fahrersitz 7 angeordnet. Über und hinter einer Hinterachse 8, die gelenkt werden kann, ist ein Gegengewicht 9 angeordnet. Ein Verbrennungsmotor 10, bei dem Ausführungsbeispiel in Form eines Dieselmotors 11, ist mit einem Generator 12 verblockt und erzeugt elektrischen Strom, der über einen nicht dargestellten Gleichstromzwischenkreis als Stromzwischenkreis und einen Umrichter als Leistungselektronik mindestens einen elektrischen Fahrmotor 13 der Vorderachse 14 zugeführt wird. Über den elektrischen Fahrmotor 13 wird der Gegengewichtsgabelstapler 2 angetrieben. Die Abwärme des Dieselmotors 11 wird von einer Kühlflüssigkeit aufgenommen und über einen Kühler 15, der wie durch den Pfeil angedeutet von Luft durchströmt wird, an die Umgebungsluft abgegeben.

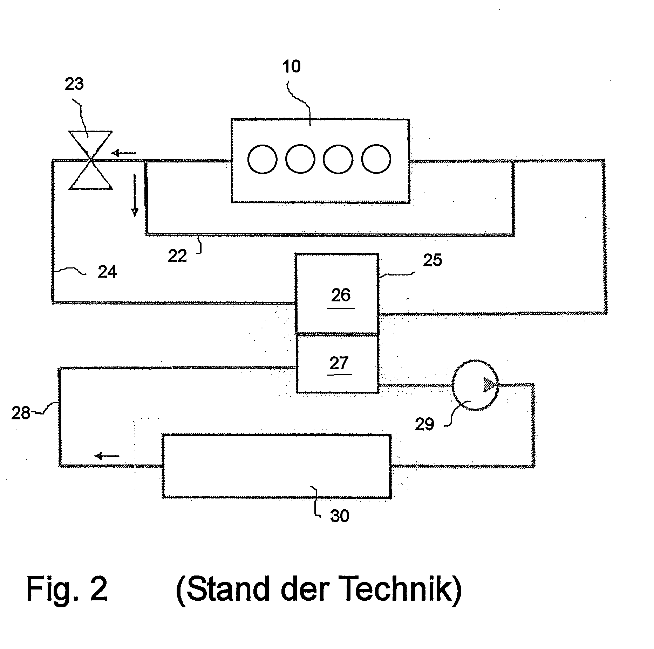

Die Fig. 2 zeigt ein Kühlsystem entsprechend dem Stand der Technik für eine mobile Arbeitsmaschine mit einem verbrennungsmotorisch-elektrischen Antrieb. Der Verbrennungsmotor 10 wird von Kühlflüssigkeit gekühlt, die über ein Thermostatventil 23 entweder über eine Kurzschlussleitung 22 direkt wieder dem Verbrennungsmotor 10 zugeführt wird oder in einem Kühlkreis 24 einem Kühler 25, um die Abwärme des Verbrennungsmotors 10 an die Umgebungsluft abzugeben. Der Kühler 25 weist hierfür eine erste Kühlzone 26 auf, die für den Kühlkreis 24 des Verbrennungsmotors 10 vorgesehen ist. In demselben Kühler 25 ist eine zweite Kühlzone 27 vorgesehen, die von Kühlflüssigkeit eines zweiten Kühlkreises 28 durchströmt wird. Über eine Pumpe 29 wird die Kühlflüssigkeit in dem zweiten Kühlkreis 28 zu einer Leistungselektronik 30 gefördert, und die Leistungselektronik 30 durch den zweiten Kühlkreis 28 gekühlt. Durch die getrennten Kühlkreise 24, 28 kann in dem zweiten Kühlkreis 28 ein niedrigeres Temperaturniveau entsprechend den Erfordernissen der Halbleiterbauelemente der Leistungselektronik 30 erreicht werden.

Nachteilig an diesem Stand der Technik ist jedoch der zusätzliche Aufwand für den Kühler 25 mit einer ersten Zone 26 und einer zweiten Zone 27 sowie die durch den ersten Kühlkreis 24 und den zweiten Kühlkreis 28 doppelten Komponenten.

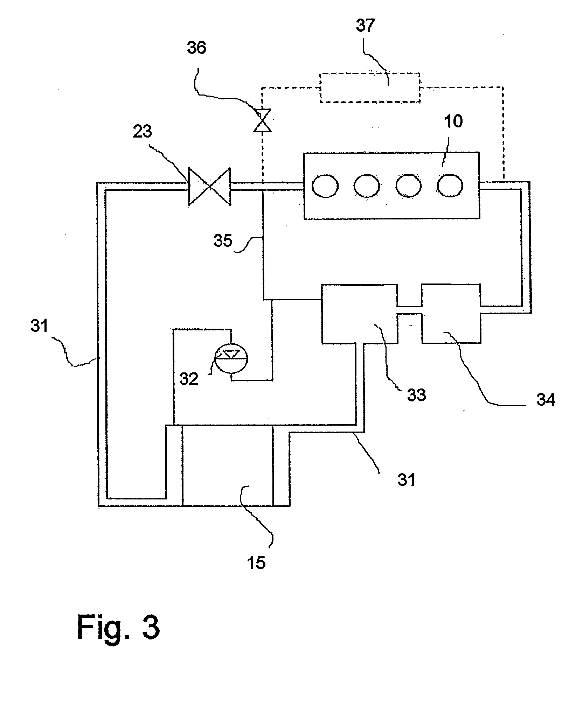

Die Fig. 3 zeigt ein Ausführungsbeispiel eines erfindungsgemäßen Kühlsystems, wie es bei dem Gegengewichtsgabelstapler 2 in der Fig. 1 zum Einsatz kommt. Mit den bisher beschriebenen Bauteilen identische Komponenten sind mit gleichen Bezugszeichen versehen.

In einem Kühlkreis 31 des Verbrennungsmotors 10 wird der Verbrennungsmotor 10 von Kühlflüssigkeit gekühlt, die dann über das Thermostatventil 23 zu dem Kühler 15 geleitet wird, in dem die Abwärme an die Umgebungsluft abgegeben wird. Nach dem Kühler 15 ist in dem Kühlkreis 31 die Leistungselektronik 33 des Fahrmotors 13 angeordnet, so dass die Kühlflüssigkeit mit der geringsten Temperatur zunächst für die Kühlung der Leistungselektronik 33 zur Steuerung des Fahrmotors 13 eingesetzt wird. In Reihe mit der Leistungselektronik 33 ist ein Bremswiderstand 34, auch als Ballastwiderstand bezeichnet, in dem Kühlkreis 31 angeordnet, bevor die Kühlflüssigkeit schließlich dem Verbrennungsmotor 10 zugeführt wird.

Wenn das Thermostatventil 23 geschlossen ist, wird die Kühlflüssigkeit über eine Kurzschlussleitung 35 direkt der Leistungselektronik 33 unter Umgehung des Kühlers 15 zugeführt.

Zusätzlich ist noch ein Kühlflüssigkeitsausgleichbehälter 32 vorgesehen, durch den die Ausdehnung der Kühlflüssigkeit, üblicherweise ein Frostschutzmittel/Wassergemisch, bei Erwärmung ausgeglichen wird.

Als Option, wie durch die gestrichelte Darstellung angedeutet, kann über ein Heizungsventil 36 ein Wärmetauscher 37 zur Beheizung der Fahrerkabine 5 vorgesehen werden, durch den erwärmte Kühlflüssigkeit geleitet werden kann.

Durch den Einsatz von Halbleiterbauelementen der Leistungselektronik 33, die Temperaturen im Bereich der Kühlflüssigkeitstemperatur des Verbrennungsmotors 10 im Betrieb zulassen, also insbesondere einen Temperaturbereich zwischen 95°C und 105°C in dem hier beschriebenen Überdruckflüssigkeitskühlsystem, kann durch die direkte Anordnung der Leistungselektronik 33 nach dem Kühler 15 im Bereich der geringsten Kühlflüssigkeitstemperatur, die Kühlung der Leistungselektronik 33 durch denselben Kühlkreis 31 wie die Kühlung des Verbrennungsmotors 10 erfolgen. Ebenso kann der Bremswiderstand 34 durch den Kühlkreis 31 mitgekühlt werden, ohne dass dieser erheblich größer ausgelegt werden muss, da die Wärmemengen, die von der Leistungselektronik 33 und dem Bremswiderstand 34 erzeugt werden, im Vergleich zur Abwärme des Verbrennungsmotors 10 in der Regel relativ gering sind. Nach einem Kaltstart des Gegengewichtsgabelstaplers 2 und des Verbrennungsmotors 10 kann über die Kurzschlussleitung 35 die Kühlflüssigkeit so lange an dem Kühler 15 vorbeigeleitet werden, bis die Kühlflüssigkeit die Betriebstemperatur erreicht hat. Für den Bremswiderstand 34 bzw. Ballastwiderstand ist regelmäßig überdies eine Flüssigkeitskühlung vorzusehen, da nur durch die hohe Energieaufnahmekapazität einer Kühlflüssigkeit die Spitzenlasten abgefangen werden können.

## Patentansprüche

1. Kühlsystem für eine mobile Arbeitsmaschine, insbesondere ein Flurförderzeug, mit verbrennungsmotorisch-elektrischem Antriebssystem, bei dem von einem Verbrennungsmotor (10) ein Generator (12) angetrieben wird, der einen Stromzwischenkreis, insbesondere einen Gleichspannungszwischenkreis, speist, und mit zumindest einer Leistungselektronik (33),
**dadurch gekennzeichnet,**
**dass** in einem Kühlkreis (31) des Verbrennungsmotors (10) nach einem Kühler (15) in der Umlaufrichtung der Kühlflüssigkeit zunächst die Leistungselektronik (33) und dann der Verbrennungsmotor (10) angeordnet ist.

2. Klimatisierungsvorrichtung nach Anspruch 1,
**dadurch gekennzeichnet,**
**dass** die Leistungselektronik (33) für den Betrieb bei Temperaturen an den Kühlflächen der Halbleiterbauelemente oberhalb von 70° C, bevorzugt für den Betrieb in einem Temperaturbereich von 95° C bis 105° C geeignet ist.

3. Kühlsystem nach Anspruch 1 oder 2,
**dadurch gekennzeichnet,**
**dass** die Leistungselektronik (33) ein Umrichter für einen elektrischen Fahrmotor (13) der mobilen Arbeitsmaschine (1) ist, der Strom aus dem Stromzwischenkreis umrichtet.

4. Kühlsystem nach einem der Ansprüche 1 bis 3,
**dadurch gekennzeichnet,**
**dass** der Stromzwischenkreis ein Gleichstromzwischenkreis ist.

5. Kühlsystem nach einem der Ansprüche 1 bis 4,
**dadurch gekennzeichnet,**
**dass** die Leistungselektronik (33) einen Gleichspannungswandler umfasst, der den Stromzwischenkreis mit einem elektrischen Energiespeicher, insbesondere Hochleistungskondensatoren oder Hochleistungsakkumulatorbatterien, verbindet.

6. Kühlsystem nach einem der Ansprüche 1 bis 5,
**dadurch gekennzeichnet,**
**dass** mehrere Leistungselektroniken (33) parallel oder in Reihe in dem Kühlkreis (31) angeordnet sind.

7. Kühlsystem nach einem der Ansprüche 1 bis 6,
**dadurch gekennzeichnet,**
**dass** ein Bremswiderstand (34) parallel zu oder nach der Leistungselektronik (33) in dem Kühlkreis (31) angeordnet ist.

8. Mobile Arbeitsmaschine, insbesondere Flurförderzeug, mit einem Kühlsystem nach einem der Ansprüche 1 bis 8.

9. Mobile Arbeitsmaschine nach Anspruch 8,
**dadurch gekennzeichnet,**
**dass** die mobile Arbeitsmaschine (1) ein Hybridfahrzeug ist.
